# EUROPEAN PATENT SPECIFICATION

(11) **EP 1 976 923 B1**
(45) Date of publication and mention of the grant of the patent: **23.09.2009**
(21) Application number: 07702943.7
(22) Date of filing: 23.01.2007
(51) Int. Cl.: C08K 3/38, C08K 3/24, C08K 5/00, C08K 5/524

(54) **FLAME RETARDANT POLYAMIDE MOLDING COMPOSITION**
FLAMMHEMMENDE POLYAMIDFORMUNGSZUSAMMENSETZUNG
COMPOSITION DE MOULAGE DE POLYAMIDE IGNIFUGE

(30) Priority: 26.01.2006 EP 06075190
(43) Date of publication of application: 08.10.2008
(73) Proprietor: DSM IP Assets B.V., 6411 TE Heerlen (NL)
(72) Inventor: PELT VAN, Wilfred Wilhelmus Gerardus Johannes, NL-5581 CL Waalre (NL)
(74) Representative: van der Ploeg, Antonius Franciscus M.J.
(86) International application number: PCT/EP2007/000530
(87) International publication number: WO 2007/085407

(56) References cited:
- EP-A- 1 503 461
- WO-A-01/98398
- DATABASE WPI Section Ch, Week 199431 Derwent Publications Ltd., London, GB; Class A23, AN 1994-253002 XP002049839 & JP 06 184431 A (ASAHI KASEI KOGYO KK) 5 July 1994 (1994-07-05)

## Description

The invention relates to a flame retardant polyamide composition, suitable for making molded articles, comprising a thermoplastic polyamide and a flame retardant system comprising a halogenated flame retardant compound and a flame retardant synergist,

Such a composition is known from WO 98/14510-A. The known composition comprises a thermoplastic polyamide, more particular a semi-crystalline polyamide with a melting point of 280-340 °C. As the halogenated flame retardant compound the known composition comprises a flame retardant with 50-70 weight % bromine. As the flame retardant synergist the known composition comprises 1 to 10 weight % of an antimony compound and 0.1 weight % zinc borate. In the examples the following components are used: polyamide 6T/66, which is a semi-aromatic polyamide, polydibromostyrene, sodium antimonate respectively sodium antimonate, zinc borate, and further a reinforcing agent, more particular glass fibres.

Polyamide molding compositions are used for example for making components for electrical and electronic applications, such as connectors. These applications not only require that the compounds used have good flame retardancy, but also a good appearance, whereas also heat stability and colour stability are required.

As is mentioned in WO 98/14510-A, a disadvantage of flame retardant polyamide molding composition comprising a thermoplastic polyamide and a flame retardant system comprising a halogenated flame retardant compound and a flame retardant synergist, is the limited color stability. According to WO 98/14510-A with conventional compositions of a flame retardant and a thermoplastic resin, the problem of the limited color stability is experienced when the compositions are extruded or molded. This problem is solved in WO 98/14510-A by adding zinc borate to a flame retardant compound comprising an antimony compound, more particular these flame retardant synergists are used in combination in specific amounts: 1 to 10 wt% of the antimony compound and 0.1 to 4 wt.% of zinc borate. According to WO 98/14510-A this measure improved the color stability of the composition, since the molded product was lighter in colour.

It has been noticed by the inventor that the colour stability of the composition comprising antimony oxide and zinc borate in the amounts of WO 98/14510-A is still insufficient, in particular when the compound is further processed, for example in a surface mounting (SMT) process, wherein the molded part is mounted on an electric circuit board and held for some time at elevated temperature.

The aim of the invention is therefore to provide a flame retardant polyamide molding composition that not only has a good colour after compounding and molding, but also has improved colour stability after heating to elevated temperature in further processing steps.

This aim has been achieved with the molding composition according to the invention, wherein the thermoplastic polyamide has a melting temperature in the range of 280-350°C, the flame retardant synergist comprises a zinc-containing compound, the polyamide composition comprises a phosphite stabilizer, and wherein the polyamide composition is free of antimony containing compounds. The advantage of the molding composition according to the invention, being free of antimony containing compounds and comprising the phosphite stabilizer, is that the molding composition not only has a good colour after molding, but also an improved colour stability in an SMT process, wherein the polyamide composition is retained for some time at elevated temperature, compared to the known molding composition of WO 98/14510-A. The effect of improved colour stability after retention at elevated temperature upon addition of a phosphite stabilizer according to the invention is particularly surprising in view of the fact that the phosphite stabilizer has hardly any to no positive effect on the colour of the molded part as such directly after molding, whereas in case the molding composition comprises antimony trioxide, the phosphite stabilizer has even a negative effect on the colour of the molded part directly after molding. Furthermore, an improvement in colour stability as found with the phosphite stabilizer is not found when the phosphite stabilizer is replaced with, for example, a hindered phenol stabilizer.

JP-A-6184431 discloses a composition comprising a polyamide a halogenated flame retardant compound, a flame retardant synergist (antimony oxide, sodium antimonite, in oxide iron oxide, zinc oxide or zinc borate and a phosphite.

With a flame retardant molding composition free of antimony containing compounds is herein understood a composition that comprises no antimony containing compounds.

This has the advantage that the colour stability after retention at elevated temperature is further improved.

The constituting components that have to be present or may optionally be present in the flame retardant polyamide molding composition according to the invention are described further herein below.

The phosphite stabilizer may be any phosphite compound that has a colour stabilizing effect on the flame retardant polyamide molding composition. The phosphite compounds that can be used as the phosphite stabilizer in the flame retardant polyamide molding composition according to the invention suitably are monophosphites, diphosphites and polyphosphites.

Suitable monophosphites are, for example, trialkylphosphites, dialkylaryl phosphites, alkyldiaryl phosphites and triaryl phosphites. The aryl groups in these phosphites may be linear as well as branched, may comprise cyclic and/or aromatic groups and may also comprise hetero-atom containing substituents. The aryl groups in these phosphites may be unsubstituted aryl groups as well as substituted aryl groups, wherein the substituted aryl groups may comprise, for example, alkyl groups and/or hetero-atom containing substituents.

An example of a suitable trialkylphosphite is tri-nonyl phosphite. An example of a suitable dialkylaryl phosphite is diiso-octyl octylphenyl phosphite. An example of a suitable alkyldiaryl phosphite is diphenyl iso-octylphosphite and an example of a suitable triaryl phosphite is triphenyl phosphite.

Suitable diphosphites are, for example, biphenylene diphosphites, pentaerythritol diphosphites, 4,4'-iso-propylidenediphenol diphosphites, and dipropyleneglycol diphosphites. The phosphite groups in these diphosphites suitably comprise alkyl and /or aryl groups, wherein the alkyl and aryl groups suitably are chosen from the alkyl and aryl groups mentioned above for the monophosphites.

An example of a suitable biphenylene diphosphite is tetrakis-(2,4-di-tertbutyl-phenyl)-4,4'- biphenylene diphosphites. Example of suitable pentaerythritol diphosphites are bis(2,4-di-t-butylphenyl) pentaerythritol diphosphite and bis-(2,4-dicumylphenyl)- pentaerythritol diphosphite. An example of a suitable 4,4'- iso-propylidenediphenol diphosphite is tetrakis(iso-decyl) iso-propylidenediphenol diphosphite, and an example of a suitable dipropyleneglycol diphosphite is tetraphenyl dipropyleneglycol diphosphite.

Preferably, the phosphite stabilizer is a diphosphite compound, more preferably a pentaerythritol diphosphite. The advantage thereof is that the colour stability after retention at elevated temperature is even further increased.

Also preferably, the diphosphites compound has a melting point of at least 100°, having the advantage that the polyamide composition shows a better retention of mechanical properties at elevated temperature.

The phosphite stabilizer may be present in the polyamide composition in an amount varying of a wide range. Preferably, the phosphite stabilizer is present in an amount of 0.01-3 wt.%, more preferably 0.1-2 wt.%, still more preferably 0.2-1 wt.%, relative to the total weight of the flame retardant polyamide molding composition. The higher the minimum amount of the phosphite stabilizer, the larger is the colour stabilizing effect upon heating.

The polyamide molding composition according to the invention may also contain at least one other stabilizer, wherein "other stabilizer" is understood a stabilizer not being a phosphite stabilizer. Stabilizers that may be used as the other stabilizers, next to the phosphite stabilizer, in the flame retardant polyamide molding composition according to the invention can be any compound that has a stabilizing effect on the flame retardant polyamide molding composition. Suitable stabilizers include acid scavengers, UV-stabilizers, anti-oxidants and heat stabilizers. Examples of suitable anti-oxidants are hindered phenols, thio compounds, phosphorous containing compounds and amines. Examples of suitable acid scavengers are hydrotalcite, magnesium oxide and magnesium hydroxide. Examples of suitable heat stabilizers are phenol-based stabilizers, metal halides and mixtures of metal halides with alkali metal halides, such as CuI/KI.

Preferably, the polyamide molding composition comprises as the other stabilizer, next to the phosphite stabilizer, a phenol based stabilizer. The advantage thereof is that the heat stability of the flame retardant polyamide molding composition is further improved.

Also preferably, the at least one other stabilizer is present in an amount of 0.01-3 wt.%, more preferably 0.1-2 wt.%, still more preferably 0.2-1 wt.%, relative to the total weight of the flame retardant polyamide molding composition.

The halogenated flame retardant compound in the flame retardant polyamide molding composition according to invention can be any halogenated compound that can provide flame retardant properties to the polyamide composition. Suitably, the halogenated flame retardant compound is a brominated or chlorinated compound, preferably a brominated compound, more preferably a brominated compound with a bromine content of 50-70 weight %, relative to the weight of the brominated compound. Suitably, the halogenated flame retardant compound is a halogenated polymer, preferably a polymer containing halogenated aromatic rings, more preferably the halogenated polymer is a halogenated polystyrene or halogenated polyphenylene ether. Even more preferably, the halogenated flame retardant compound preferably is a brominated polystyrene, still more preferably a polybromostyrene.

The flame retardant polyamide molding composition may also comprise other flame retardant compounds. The other flame retardant compounds, that might be present in the polyamide composition, can be any flame retardant compound that is suitable for use in a flame retardant polyamide molding composition and that does not detract, at least not in a detrimental extent, from the other properties of the flame retardant polyamide molding composition and the products molded thereof. It is always possible to use other flame retardant compounds in a limited amount, thereby limiting any detrimental effect thereof. The person skilled in the art of making flame retardant polyamide molding compositions and molded products thereof can determine by routine experiments up to what level such other flame retardant compounds are still acceptable.

Preferably, the other flame retardant compound, if used at all, is present in a limit amount, of for example 0-20 wt.%, preferably 0-10, and more preferably 0-5 wt.%, relative to the total weight of the flame retardant polyamide molding composition.

The flame retardant synergist in the polyamide molding composition according to the invention may be any zinc containing compound that is free of antimony containing compounds and that has a positive effect on the flame retardant properties of the moulding composition. Suitably, the flame retardant synergist comprises a metal salt of boric acid or stannic acid the metal zinc.

Suitable metal salts are for example, zinc stannate, zinc hydroxystannate, and zinc borate.

Of these metal salts, zinc borate and zinc stannate, and mixtures thereof are preferred. More preferably, the flame retardant polyamide molding composition comprises zinc borate. The advantage of these preferred embodiments is that the colour stability after retention at elevated temperature is even further enhanced.

Examples a suitable zinc borates are Firebreak ZB and Firebreak 500, both sold by Borax.

Preferably, the flame retardant synergist is present in an amount of 0.1-20 wt.%, more preferably 1-15 wt.%, still more preferably 5-10 wt.%, relative to the total weight of the flame retardant polyamide molding composition.

The thermoplastic polyamide in the molding composition according to the invention may be any thermoplastic polyamide that is suitable for use in molding compositions for electric and electronic applications and have sufficient dimensional stability for use in an SMT process. In particular the thermoplastic polyamide is a semi-crystalline polyamide having a melting temperature (Tₘ) in the range of 210-350°C. Suitably, the thermoplastic polyamide is an aliphatic or semi-aromatic polyamide.

A suitable semi-crystalline aliphatic polyamide is, for example, polyamide 46, and copolyamides thereof, for example with polyamide 6 and/or polyamide 66.

Suitable semi-crystalline semi-aromatic polyamides are, for example, polyamide 6T, polyamide 8T, polyamide 9T, polyamide 10T, and copolyamides of these polyamides with, for example, polyamide 6, polyamide 66 and/or polyamide 46, and copolyamides thereof.

Preferably, the thermoplastic polyamide is a semi-crystalline polyamide with a melting temperature (Tₘ) in the range of 280-340°C, more preferably 290-330°C, still more preferably 300-320°C. A higher Tm has the advantage that the polyamide composition has a better solder resistance and better dimensional stability when subjected to conditions applied during surface mounting processes.

The flame retardant polyamide molding composition according to the invention may comprise, next to the said thermoplastic polyamide and the optionally polymeric halogenated flame retardant compound, other polymer compounds.

The other polymeric components, that might be present as part of the polymer resin in the polymer composition, can be any polymeric component that is suitable for use in a flame retardant polyamide molding composition and that does not detract, at least not in a detrimental extent, from the properties of the flame retardant polyamide molding composition and the products molded thereof. It is always possible to use these other polymeric components in a limited amount, thereby limiting any detrimental effect thereof. The person skilled in the art of making flame retardant compounds thereof can determine by routine experiments up to what level such other polymeric components are still acceptable.

Suitable other polymeric components are, for example, impact modifiers, such as rubbers, and polymeric flow improving agents..

If present at all, the other polymeric components are preferably present in a total amount in the range of 0- 35 weight % (wt.%), more preferably 1-20 wt.%, still more preferably 5-10 wt.%, relative to a total amount of the thermoplastic polyamide and the at least one other polymeric component.

The molding composition according to the invention may comprise further components, next to the already mentioned polymers, flame retardant compounds, flame retardant synergists and stabilizer system. Suitable further components, that may be present in the molding composition are, for example, reinforcement fibres, fillers, as well as other additives. As the reinforcement fibres and fillers, any known fiber or filler compound that is suitable for use in a polyamide molding composition can be used. Suitable reinforcement fibres are for example, glass fibres and carbon fibres. Suitable fillers are, for example, glass beads, mineral fillers such as calcium carbonate, talc, mica and kaolin, and nanofillers such as nanoclay, montmorillonite and wollastonite.

Preferably, the flame retardant polyamide molding composition according to the invention comprises the reinforcement fibres and fillers in a total amount of 0-60 wt.%, more preferably 10-50 wt.% and still more preferably 30-40 wt.%, relative to the total weight of the flame retardant polyamide molding composition.

Other additives that may suitably be present in the polyamide composition according to the invention can be any auxiliary additive that is suitable for use in polyamide molding compositions and include, for example, pigments, fillers, inorganic flow improving additives, nucleating agents, and processing aids.

Suitable inorganic flow improving agents are, for example, metal salts of metals of group I and group II of the Periodic Table, such as group I and group II metal carboxylates. Preferably, these group I and group II metal carboxylates are used in an amount of 0.01 - 5 wt.%, preferably 0.1-1.0 wt.%, relative to the total weight of the polymer composition. Also preferably, the group I and group II metal salts are magnesium carboxylates, such as magnesium diacetate and magnesium distearate. The advantage of the use of a polymer composition comprising a group I and group II metal salt, in particular the preferred ones in the amounts mentioned here above, is that the impregnation of the reinforcing fibers during the compaction process is improved, while the mechanical properties of the resulting compacted composite are hardly affected if any.

The other additive or additives making up for the at least one auxiliary additive are suitably present in a total amount of 0-20 wt.%, and optionally 0.01-15 wt.%, preferably 0.1 - 10 wt.%, or even 1 - 5 wt.%, relative to the total weight of the molding composition, of at least one further additive.

In an embodiment of the invention, the flame retardant polyamide composition consists of:
a. 20-80 wt.% of a polymer composition consisting of
   (i) at least 50 pbw of a thermoplastic polyamide, and optionally
   (ii) at least one other polymer compound, wherein the total amount of (a)(i) + (a)(ii) is 100 pbw,
b. 10-60 wt.% of a flame retardant system consisting of
   (i) an halogenated flame retardant compound,
   (ii) an antimony free flame retardant synergist comprising a zinc containing flame retardant synergist, and optionally
   (iii) other flame retardant components,
c. 0.01-10 wt.% of a stabilizer system consisting of
   (i) at least 0.01 wt.% of a phosphite stabilizer, and optionally
   (ii) at least one other stabilizer,
d. 0-60 wt.% of reinforcing fibres and/or fillers, and
e. 0-20 wt.% of at least one other additive,
wherein all wt.% are relative to the total weight of the polyamide composition; and the sum of (a) + (b) + (c) + (d) + (e) is 100 wt.%.

In a more preferred embodiment the flame retardant polyamide composition consists of:
a) 20-60 wt.% of a polymer composition consisting of
   (i) 75-100 pbw of the thermoplastic polyamide, and
   (ii) 0-25 pbw of the at least one other polymer compound, wherein the total amount of (a)(i) + (a)(ii) is 100 pbw,
b) 20-60 wt.% of a flame retardant system consisting of
   (i) 15-45 wt.% of the halogenated flame retardant compound,
   (ii) 1-20 wt.% of the antimony free flame retardant synergist consisting for at least 50 wt.%, relative to the total weight of the flame retardant synergist, of the zinc containing flame retardant synergist, and optionally
   (iii) 0-10 wt.% of the other flame retardant components, wherein the total amount of (b)(i) + (b)(ii) + (b)(iii) is 20-60 wt.%.
c) 0.01-10 wt.% of a stabilizer system consisting of
   (i) 0.01-5 wt.% of a phosphite stabilizer, and
   (ii) 0-5 wt.% of at least one other stabilizer,
d) 20-50 wt.% of reinforcing fibres and/or fillers, and optionally
e) 0-10 wt.% of the at least one other additive,
wherein all wt.% are relative to the total weight of the polyamide composition, and the sum of (a) + (b) + (c) + (d) + (e) is 100 wt.%.

The invention also relates to a molded part made from a molding composition according to the invention and any preferred embodiments thereof. Preferably, the molded part is a connector.

The invention also relates to a mounting process wherein a molded part according to the invention is mounted with an SMT process. More particularly, the invention relates to a process for making an assembly, the process comprising a step wherein a molded part comprising a polyamide composition according to the invention or any preferred embodiment thereof is mounted on another part using surface mounting technology.

The invention is further illustrated with the following examples and comparative experiments.

### Raw Materials

For the preparation of the polyamide compositions described below, industrial grade materials were used.

### Materials

- PA-I: Semi-crystalline aliphatic polyamide based on polyamide 46: nrel 2.8, Tm 295 °C
- PA-II: Semi-crystalline semi-aromatic polyamide based on polyamide 66/6T: nrel 2.5, Tm 320°C
- BPS: Brominated polystyrene: PDBS 80 (ex. Chemtura/Great Lakes)
- ATO: Antimony trioxide (ex. Campine)
- SAM: Sodium antimonate: Pyroblock SAP2 (ex. Chemtura/Great Lakes)
- ZST: Zinc stanate: Flamtard S (ex WilliamBlythe)
- ZBO: Zinc Borate: Firebreak ZB (ex Borax)
- PS: Phosphite Stabilizer: Doverphos S9228: (ex. Dover)
- HPS: Hindered phenol stabilizer: Irganox 1098 (ex Ciba)

### Example I

### Preparation of polyamide composition

The polyamide composition according to Example I, comprising a combination of 29.4 wt.% polyamide-I (PA-I), 22.5 wt.% brominated polystyrene (BPS), 7.5 wt.% zinc borate (ZBO), 0.5 wt.% phosphite stabilizer (PS), 0.3 wt.% hindered phenol stabilizer (HPS), 40 wt.% glass fibres, the weight % being relative to the total weight of the composition, was prepared by melt-mixing the constituents on a Werner & Pfleiderer ZSK-25 twin screw extruder using a 300°C flat temperature profile. The constituents were fed via a hopper, except the glass fibers, which were added via a side feed. The polymer melt was degassed at the end of the extruder into strands, cooled and chopped into granules.

### Injection moulding

The granules were injection moulded into test bars according to ISO 527/1A multipurpose test-specimens, and the colour of the test-specimens was recorded.

### Testing

The test-specimens were subjected to a standard reflow temperature profile in an SMT oven according to the method of IPC/JEDE J-STD-020B, Table 5-2, Pb-Free assemblies. After the test program, the colour of the treated test-specimens was compared with the colour of the untreated test-specimens and the result was recorded.

The composition as well as the test results for Example I are listed in Table 1.

### Example II and Comparative Experiments A-E

The polyamide compositions of Example II and Comparative Experiments A-E-were prepared with the same constituents and same procedure-as, for Example I, except that variations were brought about in the flame retardant synergist and stabilizer system, and the amount of polyamide was adjusted accordingly. The polyamide compositions of Example II and Comparative Experiments A-E were used for preparing test-specimens, which were prepared and tested as described above for Example I. The compositions of and test results for Example II and Comparative Experiments A-E have been listed in Table 1.

**Table 1: Compositions (in weight %) and test results Examples I-III and Comparative Experiments A-E**

| | EX-I | EX-II | EX-III | EX-IV | EX-V | CE-A | CE-B | CE-C | CE-D | CE-E | CE-F | CE-G |
|---|---|---|---|---|---|---|---|---|---|---|---|---|
| PA-I | 29.2 | 29.2 | 29.5 | 29.0 | 28.5 | 29.7 | 29.2 | 29.7 | 29.5 | 29.7 | 29.7 | 29.2 |
| BPS | 22.5 | 22.5 | 22.5 | 22.5 | 22.5 | 22.5 | 22.5 | 22.5 | 22.5 | 22.5 | 22.5 | 22.5 |
| ATO | | | | | | 7.5 | 7.5 | | | | | |
| SAM | | | | | | | | | | | 7.5 | 7.5 |
| ZST | | 7.5 | | | | | | | | 7.5 | | |
| ZBO | 7.5 | | 7.5 | 7.5 | 7.5 | | | 7.5 | 7.5 | | | |
| PS | 0.5 | 0.5 | 0.5 | 1 | 1 | | 0.5 | | | | | 0.5 |
| HPS | 0.3 | 0.3 | 0 | 0 | 0.5 | 0.3 | 0.3 | 0.3 | 0.5 | 0.3 | 0.3 | 0.3 |
| Glass fibers | 40 | 40 | 40 | 40 | 40 | 40 | 40 | 40 | 40 | 40 | 40 | 40 |
| | | | | | | | | | | | | |
| Colour | white | off white | white | white | white | white | grey | white | white | brownish | off white | grey |
| SMT ^{a)} | ++ | + | +/++ | ++ | +++ | - | - | - | - | - | - | - |

| | | | | | | | | | | | | |
|---|---|---|---|---|---|---|---|---|---|---|---|---|
| a) Colour retention after SMT process: - = bad colour retention; + = good colour retention; ++ = better colour retention, +++ = best colour retention. | | | | | | | | | | | | |

### Examples VI-VII and Comparative Experiments H-K

The polyamide compositions of Examples VI-VII and Comparative Experiments H-K I were prepared with the same constituents and same procedure as for Example I, except that polyamide-I was replaced by polyamide-II and variations were brought about in the flame retardant synergist and stabilizer system. The polyamide compositions of Examples VI-VII and Comparative Experiments H-K were used for preparing test-specimens, which were prepared and tested as described above for Example I. The compositions of and test results for Examples VI-VII and Comparative Experiments H-K have been listed in Table 2.

**Table 2: Compositions (weight %) and test results Examples VI-VII and Comparative Experiments H-K.**

| | EX-VI | EX-VII | CE-H | CE-I | CE-J | CE-K |
|---|---|---|---|---|---|---|
| PA-II | 35.9 | 35.9 | 36.4 | 36.4 | 35.9 | 36.4 |
| BPS | 16 | 16 | 16 | 16 | 16 | 16 |
| SAM | | | | | 6.5 | 6.5 |
| ZST | | 6.5 | | 6.5 | | |
| ZBO | 6.5 | | 6.5 | | | |
| PS | 0.5 | 0.5 | | | 0.5 | |
| HPS | 0.3 | 0.3 | 0.3 | 0.3 | 0.3 | 0.3 |
| Glass fibers | 40 | 40 | 40 | 40 | 40 | 40 |
| | | | | | | |
| Colour | white | off white | white | brownish | grey | brownish |
| SMT a) | ++ | + | - | - | - | - |

| | | | | | | |
|---|---|---|---|---|---|---|
| a) Colour retention after SMT process: - = bad colour retention; + = good colour retention; ++ = better colour retention, +++ = best colour retention. | | | | | | |

## Claims

1. Flame retardant polyamide composition comprising a thermoplastic polyamide with a melting temperature in the range of 280-350°C, a flame retardant system comprising a halogenated flame retardant compound and a flame retardant synergist comprising a zinc-containing compound, and a phosphite stabilizer, wherein the polyamide composition is free of antimony containing compounds.

2. Flame retardant polyamide composition according to claim 1, wherein the phosphite stabilizer is a diphosphite compound.

3. Flame retardant polyamide composition according to claim 1 or 2, wherein the polyamide composition comprises a phenol based stabilizer.

4. Flame retardant polyamide composition according to any of claims 1-3, wherein the halogenated flame retardant compound is a brominated compound.

5. Flame retardant polyamide composition according to any of claims 1-4, wherein the polyamide composition comprises one or more components selected from the group consisting of other polymer compounds, reinforcement fibres, fillers and further additives.

6. A molded part made from a polyamide composition according to any of claims 1-5.

7. Process for making an assembly comprising a step wherein a molded part comprising a polyamide composition according to any of claims 1-5 is mounted with SMT on another part.

8. Assembly comprising an SMT mounted connector obtainable with the process according to claim 7.

## Patentansprüche

1. Flammgeschützte Polyamidzusammensetzung, umfassend ein thermoplastisches Polyamid mit einer Schmelztemperatur im Bereich von 280-350°C, ein Flammschutzmittelsystem, umfassend eine halogenierte Flammschutzverbindung und einen Flammschutzmittelsynergisten, umfassend eine Zink enthaltende Verbindung, und einen Phosphit-Stabilisator, worin die Polyamidzusammensetzung frei von Antimon enthaltenden Verbindungen ist.

2. Flammgeschützte Polyamidzusammensetzung nach Anspruch 1, worin es sich bei dem Phosphit-Stabilisator um eine Diphosphitverbindung handelt.

3. Flammgeschützte Polyamidzusammensetzung nach Anspruch 1 oder 2, worin die Polyamidzusammensetzung einen auf Phenol basierenden Stabilisator umfaßt.

4. Flammgeschützte Polyamidzusammensetzung nach einem der Ansprüche 1-3, worin es sich bei der halogenierten Flammschutzverbindung um eine bromierte Verbindung handelt.

5. Flammgeschützte Polyamidzusammensetzung nach einem der Ansprüche 1-4, worin die Polyamidzusammensetzung eine oder mehrere Komponenten aus der Gruppe bestehend aus anderen Polymerverbindungen, Verstärkungsfasern, Füllstoffen und weiteren Additiven umfaßt.

6. Formkörper aus einer Polyamidzusammensetzung nach einem der Ansprüche 1-5.

7. Verfahren zur Herstellung einer Anordnung, bei dem man ein Formteil, das eine Polyamidzusammensetzung nach einem der Ansprüche 1-5 umfaßt, mittels SMT auf einem anderen Teil montiert.

8. Anordnung, umfassend einen mittels SMT montierten Verbinder, erhältlich nach dem Verfahren nach Anspruch 7.

## Revendications

1. Composition polyamide ignifuge comprenant un polyamide thermoplastique ayant une température de fusion de 280-350 °C, un système ignifuge comprenant un composé ignifuge halogéné et un agent synergique ignifuge comprenant un composé contenant du zinc, et un stabilisateur phosphite, la composition polyamide étant exempte de composés contenant de l'antimoine.

2. Composition polyamide ignifuge selon la revendication 1, dans laquelle le stabilisateur phosphite est un composé diphosphite.

3. Composition polyamide ignifuge selon la revendication 1 ou 2, la composition polyamide comprenant un stabilisateur à base de phénol.

4. Composition polyamide ignifuge selon l'une quelconque des revendications 1-3, dans laquelle le composé ignifuge halogéné est un composé bromé.

5. Composition polyamide ignifuge selon l'une quelconque des revendications 1-4, la composition polyamide comprenant un ou plusieurs composants sélectionnés dans le groupe constitué d'autres composés polymères, de fibres de renforcement, de charges et d'autres additifs.

6. Pièce moulée constituée d'une composition polyamide selon l'une quelconque des revendications 1-5.

7. Procédé de fabrication d'un assemblage, comprenant une étape dans laquelle une pièce moulée comprenant une composition polyamide selon l'une quelconque des revendications 1-5 est montée en utilisant une technologie de montage en surface sur une autre pièce.

8. Assemblage comprenant un connecteur monté en utilisant une technologie de montage en surface qui peut être obtenu en utilisant le procédé selon la revendication 7.
